# FASCICULE DE BREVET EUROPEEN

(11) **EP 2 232 448 B1**
(45) Date de publication et mention de la délivrance du brevet: **14.03.2018**
(21) Numéro de dépôt: 08864761.5
(22) Date de dépôt: 10.12.2008
(51) Int. Cl.: G07B 17/00, G06F 3/12, H04L 12/58

(54) **SYSTEME DE GESTION DE COURRIER PAR VOIE ELECTRONIQUE**
SYSTEM ZUR ELEKTRONISCHESPOSTBERICHTVERARBEITUNG
SYSTEM FOR MANAGING MAIL ELECTRONICALLY

(30) Priorité: 10.12.2007 FR 0708584; 10.01.2008 FR 0800147
(43) Date de publication de la demande: 29.09.2010
(73) Titulaire: Logidoc Solutions, 87000 Limoges (FR)
(72) Inventeur: PEAUDECERF, Bertrand, F-87350 Panazol (FR); PREVEL, Jean-Claude, F-87100 Limoges (FR)
(74) Mandataire: CAPRI
(86) Numéro de dépôt international: PCT/FR2008/052261
(87) Numéro de publication internationale: WO 2009/080983

(56) Documents cités:
- WO-A-00/57285
- WO-A-01/80022
- WO-A-2004/040868
- WO-A-2006/017829
- FR-A- 2 761 218
- US-A1- 2004 207 867

## Description

La présente invention concerne un système de gestion de courrier par voie électronique.

De nos jours, le courrier est un média incontournable pour communiquer avec les clients et/ou les prospects. Or, les dépenses associées à la fonction du courrier représentent pour les entreprises des frais de fonctionnement importants tant au niveau du matériel que du consommable, de l'affranchissement et du personnel dédié à la gestion du courrier. De plus, de nombreuses entreprises font face à d'importants problèmes de gestion concernant le volume du courrier, comme notamment les factures, les lettres simples et recommandées, les loyers, les relances, ce type de courrier représentant environ 70 à 80% du volume total du courrier. A cela s'ajoutent d'autres types de courrier, relatifs notamment à l'aspect de la communication avec les clients pour les informer et les fidéliser, par exemple par l'intermédiaire de mailing, d'informations diverses, d'invitations, etc. Il a donc été proposé de traiter dans un environnement industriel toute sorte de courrier, que ce soit des courriers simples, des courriers recommandés ou tout ce qui se rapporte au marketing direct. Il a ainsi été proposé de transférer vers un serveur par courrier électronique des courriers réalisés dans un format prédéfini, ledit serveur étant adapté à faire imprimer et mettre sous pli lesdits courriers au niveau d'un centre éditique, de manière industrielle. Il a aussi été proposé de transférer des courriers simples et/ou recommandés par voie électronique aux destinataires, ce mode de transmission permettant un archivage et un horodatage précis du contenu de chaque courrier transmis. Les documents WO 2006/017829, US 2004/207867, WO 01/80022, WO 00/57285, FR-2 761 218, WO 2004/040868 et WO 2007/119012 décrivent des solutions de l'art antérieur tel que décrites ci-dessus. Ces solutions présentent toutefois des inconvénients, et notamment l'obligation pour l'auteur du courrier à utiliser une plateforme ou un format spécifique pour rédiger son courrier. L'utilisateur doit donc changer sa manière de travailler par rapport à celle utilisée avec les courriers papiers classiques, à savoir qu'il doit prévoir dès le départ une création du courrier à envoyer dans un format et selon une configuration préétablie. Se pose aussi le problème des entêtes et autres présentations des courriers, qui ne sont pas forcément normalisés. L'obligation de passer par une plateforme spécifique au moment de la création ou rédaction du courrier s'avère ainsi être un frein important à la généralisation de ce type de système au sein des entreprises.

La présente invention a pour but de fournir un système de gestion de courrier par voie électronique qui ne reproduit pas les inconvénients susmentionnés.

En particulier, la présente invention a pour but de fournir un système de gestion de courrier par voie électronique qui n'impose sensiblement aucun changement dans les habitudes de l'utilisateur au moment de la création du courrier à envoyer et/ou de sa transmission.

La présente invention a aussi pour but de fournir un tel système de gestion de courrier par voie électronique qui soit simple et peu coûteux à réaliser et à utiliser.

La présente invention a encore pour but de fournir un tel système de gestion de courrier par voie électronique qui garantisse une fiabilité et une sécurité accrue lors de l'envoi des courriers, notamment du type recommandé.

La présente invention a donc pour objet un système de gestion de courrier par voie électronique tel que décrit dans la revendication 1. Des modes de réalisation avantageux sont décrits dans les revendications dépendantes.

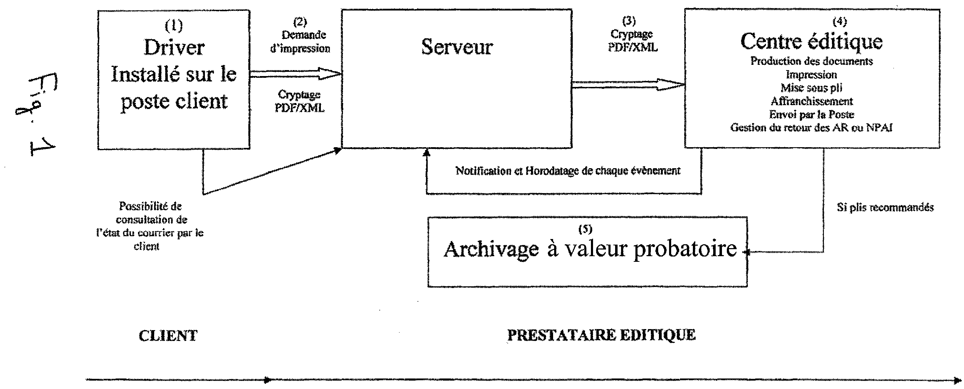

Ces avantages et caractéristiques et d'autres de la présente invention apparaîtront plus clairement au cours de la description détaillée suivante d'un mode de réalisation avantageux de celle-ci, faite en référence à la figure 1 jointe qui représente un schéma d'un mode de réalisation avantageux de la présente invention.

La présente invention s'applique à l'industrialisation du courrier, et permet notamment de réduire significativement le coût de traitement du courrier, et d'augmenter la productivité et la qualité des courriers, en particulier à travers la traçabilité, la gestion de la couleur, l'archivage à valeur probatoire, la dématérialisation des documents, ainsi que la gestion des « NPAI » (n'habite pas à l'adresse indiquée) et des « AR » (accusé de réception). La présente invention s'applique en particulier à des courriers créés sur des postes de travail, d'où ils sont transmis à un serveur, lequel est adapté à gérer le transfert dudit courrier vers son destinataire.

Selon une première variante de réalisation, ledit serveur transfère le courrier à un centre éditique, qui peut être soit une usine documentaire propre à l'entreprise de l'auteur dudit courrier à envoyer, soit un prestataire éditique industriel externe. Ce centre éditique sera alors adapté à imprimer le courrier, à le mettre sous pli, à l'envoyer à son destinataire, à gérer les éventuels retours, y compris les AR et les NPAI, et également l'archivage à valeur probatoire ou probante dans le cadre d'un courrier ou pli recommandé. Cette production par un prestataire éditique présente de nombreux avantages, et notamment la qualité du courrier (à la fois au niveau de son intégrité et de son intégralité), des réductions de colis au conditionnement des expéditions, la garantie du respect des délais et des engagements des services, le suivi et la traçabilité des documents, l'hébergement et la consultation en ligne, l'archivage à valeur probatoire des documents dans le cadre d'un envoi en recommandé. En particulier, le serveur qui reçoit le courrier envoyé du poste de travail, permet d'organiser la production et de préparer les demandes d'impression du centre éditique. Lorsque le courrier est transmis à un centre éditique, celui-ci réalise dans un premier temps la production informatique du document, la massification, le regroupement, le tri, la conversion du document dans un format du marché, et dans un second temps l'impression, la mise sous pli, l'affranchissement, l'envoi postal et l'archivage à valeur probatoire dans le cadre d'un courrier recommandé. Il est à noter que chaque étape peut comporter une fonction de contrôle à l'aide de caméras intelligentes situées à l'entrée et à la fin de chaque processus permettant d'en vérifier ainsi la bonne exécution. De plus, au cours de chaque étape, la chaîne de production peut notifier et relater au serveur chaque événement. Ainsi, l'utilisateur peut venir consulter à tout moment sur le serveur, toutes les demandes qu'il a transmis sur une palette donnée avec la faculté pour lui, si le pli n'est pas envoyé, de suspendre l'envoi. Ce mode de routage répond aux besoins des entreprises qui ont des volumes importants comme les courriers, les relances, les factures, les mailings, etc. En particulier, la présente invention permet de gérer très aisément au moins 85% des courriers qui peuvent être fabriqués et industrialisés selon l'invention. Pour les 15% restants, qui nécessitent par exemple une signature manuelle obligatoire, l'industrialisation est plus complexe mais néanmoins également possible.

Dans une seconde variante de réalisation de l'invention, le serveur transmet par voie électronique le courrier à son destinataire. Ceci peut être fait par exemple par l'envoi d'un courrier électronique d'information qui informe le destinataire qu'un courrier lui étant destiné est disponible sur le serveur. Lorsque le destinataire clique sur le lien contenu dans ledit courrier électronique d'information, il se connecte audit serveur, sur lequel, après identification, il peut accéder audit document, notamment le visualiser, le télécharger et/ou l'imprimer. Dans le cadre d'un courrier recommandé, des moyens de cryptage et/ou d'authentification performants peuvent être utilisés, notamment du type à clés asynchrones. Ainsi, le contenu ainsi que la date et l'heure précises de lecture du courrier par le destinataire peuvent être garantis. Divers systèmes d'archivage, de préférence sécurisés, peuvent bien entendu être utilisés et chaque étape peut être horodatée de manière avantageuse pour permettre une traçabilité totale.

Afin d'éviter les inconvénients des systèmes de l'art antérieur, la présente invention prévoit d'installer sur le poste de travail de chaque utilisateur du système un pilote adapté à créer une imprimante virtuelle sur ledit poste de travail. Ce pilote (également appelé driver) est un logiciel qui vient ajouter une imprimante virtuelle dans la liste des imprimantes classiques de l'utilisateur. Ce pilote comporte des moyens de transmission adaptés à transférer le courrier à envoyer dudit poste de travail audit serveur, ces moyens de transmission étant activés par ledit pilote. Ainsi, l'utilisateur qui souhaite utiliser le système de l'invention, va créer son document sur son poste de travail comme il le faisait précédemment lorsqu'il envoyait ses courriers par voie papier classique (par exemple en utilisant son traitement de texte habituel), et au moment où ce document est prêt, au lieu de l'imprimer de manière classique sur une imprimante papier, il choisit l'imprimante virtuelle dans la liste des imprimantes, ce qui transfère ledit courrier à envoyer directement audit serveur et de là soit au centre éditique, soit au destinataire par voie électronique, comme décrit précédemment. Un avantage très important de la présente invention est donc ici que l'utilisateur n'a pas à changer ses habitudes pour pouvoir utiliser le système, puisqu'il continue de créer son courrier à envoyer avec ses logiciels habituels, que ce soit le traitement de texte, les tableurs ou autres. Avantageusement, ledit pilote est adapté à reconnaître automatiquement le format choisi par ledit utilisateur. De plus, le pilote est avantageusement adapté à analyser le courrier à envoyer pour en extraire divers paramètres. Par exemple, ces paramètres peuvent être des paramètres d'environnement, tels que par exemple l'identification du poste de travail sur lequel le courrier à envoyer a été créé, l'identification de l'auteur dudit courrier, ce qui peut être très utile lorsque plusieurs utilisateurs utilisent le même poste de travail, le nombre de pages du courrier, le nombre de pièces jointes et/ou l'adresse du destinataire. De manière avantageuse, le pilote est paramétrable et programmable pour définir lesdits paramètres à reconnaître. Ce paramétrage peut être réalisé au moment de l'installation du pilote sur le poste de travail, mais aussi au fur et à mesure de l'utilisation, par l'utilisateur lui-même, pour adapter le pilote à ses habitudes. En particulier, l'extraction des paramètres est de préférence réalisée par zone géographique sur le courrier à envoyer, avec par exemple une identification de la zone adresse. Bien entendu, un nombre et un type quelconque de paramètres peuvent être choisis, y compris des paramètres de texte tels que des mots clefs par une analyse du texte complet (analyse Full Text). Avantageusement, le pilote est adapté à formater l'adresse du destinataire du courrier à envoyer dans un format prédéfini. Ainsi, après avoir extrait les informations liées à l'adresse du destinataire à partir de l'analyse du document comme décrit précédemment (par zone géographique du pavé adresse), le pilote peut automatiquement formater ladite adresse au format adapté au courrier industriel (notamment à la fenêtre de l'enveloppe) qui sera édité par le centre éditique. De cette manière, l'utilisateur n'est plus contraint de saisir l'adresse du destinataire dans des champs prédéfinis réservés à cet effet pour pouvoir utiliser le système, mais au contraire c'est le système qui reconnaît et redresse les informations de l'adresse du destinataire pour les adapter automatiquement audit système. Encore une fois, l'utilisateur garde ici ses habitudes de travail et l'utilisation du système de l'invention ne lui impose pas de contraintes.

Grâce à la détection et à l'extraction de paramètres, le pilote est adapté à gérer de manière automatique certaines fonctionnalités. Ainsi, par exemple, la détection du mot clef « accident de travail » dans la zone objet du courrier peut générer l'ajout automatique en pièce jointe d'un formulaire CERFA adapté aux accidents de travail. Bien entendu, d'autres paramètres, notamment du type publicitaire et/ou marketing, peuvent utilement être gérés de manière automatique par le pilote, afin de simplifier au maximum la tâche de l'utilisateur. Ceci peut s'avérer particulièrement utile dans le cadre de mailing, où des courriers similaires doivent être envoyés à un grand nombre de destinataires ayant des caractéristiques communes.

Après analyse et extraction des paramètres par ledit pilote, celui-ci est adapté à transformer le courrier à envoyer dans un format de fichier normalisé prédéfini, comme par exemple le format PDF/XML, où le courrier est transformé en format PDF auquel est associé un fichier XML, pour le transfert de données utiles à la production, par exemple le pavé adresse redressé, le nombre de pages, le nombre de pièces jointes, etc. Ce fichier PDF/XML est de préférence sécurisé, notamment crypté avant envoi. Ceci garantit une gestion sûre et fiable du courrier par le serveur, et en particulier lorsqu'il doit transmettre ledit courrier à un centre éditique.

Ainsi, contrairement aux solutions proposées par les systèmes de l'art antérieur, la présente invention permet à l'utilisateur de gérer de manière beaucoup plus efficace et moins coûteuse son courrier, sans avoir à modifier ses habitudes, et notamment sans avoir à utiliser une plateforme de création de courrier spécifique, ni un formulaire similaire spécifique pour créer et/ou transférer son courrier vers le serveur du système. Au contraire, tout se passe comme si le courrier était géré de manière classique par voie papier et ce n'est qu'au moment où l'utilisateur souhaite imprimer son courrier avant sa mise sous enveloppe qu'il choisit l'imprimante virtuelle créée sur son poste de travail par le pilote, ce qui enclenchera la procédure selon l'invention.

Avantageusement, lorsque l'utilisateur clique sur cette imprimante virtuelle, une fenêtre de paramétrage peut apparaître sur son écran, lui laissant le choix parmi un certain nombre de paramètres prédéfinis, et par exemple le type de courrier (courrier simple, courrier recommandé, courrier recommandé avec accusé de réception), ainsi qu'une vérification du pavé adresse qui aura été automatiquement extrait par le pilote et qui pour des garanties et une sécurisation totale peut être soumis à l'utilisateur pour validation. Toute fenêtre de paramétrage peut également comporter la possibilité d'adjoindre des pièces jointes au courrier, que ce soient des documents ou des fichiers multimédias quelconques. L'utilisateur a alors à sa disposition un outil paramétrable et programmable, simple d'utilisation, sûr et fiable, et qui lui permet de gérer de manière particulièrement efficace son courrier.

L'invention a été décrite en référence à une variante de réalisation particulière, il est entendu qu'un homme du métier peut y apporter toutes modifications utiles sans sortir du cadre de la présente invention tel que défini par les revendications annexées.

## Revendications

1. Système de gestion de courrier par voie électronique, comprenant un poste de travail sur lequel un utilisateur peut créer un courrier à envoyer, un pilote installé sur ledit poste de travail, ledit pilote créant une imprimante virtuelle sur ledit poste de travail, un serveur adapté à recevoir ledit courrier à envoyer et à le faire transférer vers son destinataire, et des premiers moyens de transmission dudit courrier à envoyer à partir dudit poste de travail vers ledit serveur, lesdits moyens de transmission étant activés par ledit pilote, **caractérisé en ce que** ledit pilote est adapté à analyser le courrier à envoyer pour en extraire au moins un paramètre, ledit pilote étant paramétrable et/ou programmable pour définir lesdits paramètres à reconnaître, ledit paramétrage étant réalisé par zone géographique du courrier à envoyer, ledit pilote étant adapté à formater l'adresse du destinataire du courrier à envoyer dans un format prédéfini, après avoir extrait les informations liées à l'adresse du destinataire grâce à ladite analyse et ledit paramètre, ledit serveur étant adapté à transférer ledit courrier à envoyer à son destinataire par voie électronique, ou ledit serveur étant relié à un centre éditique adapté à transférer ledit courrier à envoyer à son destinataire par courrier papier classique.

2. Système selon la revendication 1, dans lequel le courrier à envoyer peut être d'un format quelconque, notamment du type traitement de texte ou tableur, ledit pilote étant adapté à reconnaître automatiquement ledit format.

3. Système selon la revendication 1 ou 2, dans lequel lesdits paramètres comprennent des paramètres d'environnement, tel que par exemple l'identification du poste de travail, l'identification de l'auteur, le nombre de pages, le nombre de pièces jointes, l'adresse du destinataire, et/ou des paramètres de textes, tels que des mots clefs dans une zone prédéfinie du courrier à envoyer.

4. Système selon l'une quelconque des revendications précédentes, dans lequel ledit pilote transforme ledit courrier à envoyer dans un format de fichier normalisé prédéfini, de préférence sécurisé et/ou crypté, tel qu'un format PDF/XML, avant sa transmission audit serveur.

5. Système selon l'une quelconque des revendications précédentes, dans lequel ledit serveur est adapté à archiver les documents reçus et/ou transmis et à horodater chaque étape.

## Patentansprüche

1. Verwaltungssystem für elektronische Post, umfassend eine Arbeitsstation, an welcher ein Benutzer ein zu versendendes Schreiben erstellen kann, einen Treiber, der in der Arbeitsstation installiert ist, wobei der Treiber einen virtuellen Drucker an der Arbeitsstation erstellt, einen Server, der dazu eingerichtet ist, das zu versendende Schreiben zu empfangen und es zu seinem Empfänger zu übermitteln, und erste Übertragungsmittel des zu versendenden Schreibens ausgehend von der Arbeitsstation zu dem Server, wobei die Übertragungsmittel durch den Treiber aktiviert werden, **dadurch gekennzeichnet, dass**
der Treiber dazu eingerichtet ist, das zu versendende Schreiben zu analysieren, um daraus mindestens ein Parameter zu extrahieren, wobei der Treiber parametrierbar und/oder programmierbar ist, um die zu erkennenden Parameter zu definieren, wobei die Parametrierung nach geografischem Gebiet des zu versendenden Schreibens erfolgt, wobei der Treiber dazu eingerichtet ist, die Adresse des Empfängers des zu versendenden Schreibens in einem zuvor definierten Format zu formatieren, nachdem die Informationen, die mit der Adresse des Empfängers verbunden sind, aufgrund der Analyse und des Parameters extrahiert wurden,
wobei der Server dazu eingerichtet ist, das zu versendende Schreiben zu seinem Empfänger auf elektronischem Wege zu übermitteln, oder der Treiber an ein elektronisches Veröffentlichungszentrum angeschlossen ist, das dazu eingerichtet ist, das zu versendende Schreiben durch traditionelle Briefpost an seinen Empfänger zu übermitteln.

2. System nach Anspruch 1, wobei das zu versendende Schreiben in irgendeinem Format vorliegen kann, insbesondere als Textverarbeitungs- oder Tabellenart, wobei der Treiber dazu eingerichtet ist, das Format automatisch zu erkennen.

3. System nach Anspruch 1 oder 2, wobei die Parameter die Parameter der Umgebung umfassen, wie beispielsweise die Identifizierung der Arbeitsstation, die Identifizierung des Autors, die Anzahl der Seiten, die Anzahl der Anhänge, die Adresse des Empfängers, und/oder Textparameter, wie etwa Schlüsselwörter in einem zuvor definierten Bereich des zu versendenden Schreibens.

4. System nach irgendeinem der vorhergehenden Ansprüche, wobei der Treiber das zu versendende Schreiben in ein zuvor definiertes genormtes Dateiformat, vorzugsweise gesichert und/oder verschlüsselt, wie etwa ein PDF/XML-Format, vor seiner Übertragung an den Server umwandelt.

5. System nach irgendeinem der vorhergehenden Ansprüche, wobei der Server dazu eingerichtet ist, die empfangenen und/oder übertragenen Dokumente zu archivieren und jeden Schritt mit Datums- und Zeitstempel zu versehen.

## Claims

1. System for managing mail electronically, comprising a workstation on which a user is able to create mail to be sent, a pilot installed on said workstation, said pilot creating a virtual printer on said workstation, a server adapted to receive said mail to be sent and have it transferred to its addressee, and first transmission means of said mail to be sent from said workstation to said server, said transmission means being activated by said pilot, **characterized in that** said pilot is adapted to analyse the mail to be sent so as to extract therefrom at least one parameter, said pilot being parameterizable and/or programmable to define said parameters to be recognized, said parameterization being performed per geographical region of the mail to be sent, said pilot being adapted to format the address of the addressee of the mail to be sent in a predefined format, after having extracted data related to the address of the addressee by means of said analysis and said parameter, said server being adapted to transfer electronically said mail to be sent to its addressee, or said server being linked to an editing centre adapted to transfer said mail to be sent to its addressee via conventional paper mail.

2. The system according to claim 1, wherein the mail to be sent may be of any format, in particular of word processing type or spreadsheet type, said pilot being adapted to recognize said format automatically.

3. The system according to claim 1 or 2, wherein said parameters comprise environment parameters such as identification of the workstation for example or identification of the author, the number of pages, the number of enclosures, the address of the addressee, and/or text parameters such as keywords in a predefined zone of the mail to be sent.

4. The system according to any of the preceding claims, wherein said pilot converts said mail to be sent into a predefined normalised file format, preferably secured and/or encrypted such as a PDF/XML format, before transmission thereof to said server.

5. The system according to any of the preceding claims, wherein said server is adapted to archive the received and/or transmitted documents and to time-stamp each step.
